(19) Europäisches Patentamt
European Patent Office
Office européen des brevets

(11) **EP 4 637 147 A1**

(12) **EUROPEAN PATENT APPLICATION**

(43) Date of publication:
**22.10.2025 Bulletin 2025/43**

(21) Application number: **25158174.0**

(22) Date of filing: **17.02.2025**

(51) International Patent Classification (IPC):
*H04N 19/147* (2014.01)       *H04N 19/117* (2014.01)
*H04N 19/124* (2014.01)       *H04N 19/14* (2014.01)
*H04N 19/142* (2014.01)       *H04N 19/82* (2014.01)

(52) Cooperative Patent Classification (CPC):
H04N 19/463; H04N 19/117; H04N 19/124;
H04N 19/132; H04N 19/14; H04N 19/142;
H04N 19/147; H04N 19/172; H04N 19/176;
H04N 19/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.04.2024  US 202418637060**

(71) Applicant: **INTEL Corporation
Santa Clara, CA 95054 (US)**

(72) Inventors:
• **ZHANG, Ximin
San Jose CA, 95129 (US)**
• **CHIU, Yi-Jen
San Jose CA, 95129 (US)**
• **ROWE, Keith W.
Shingle Springs CA, 95682 (US)**

(74) Representative: **Samson & Partner Patentanwälte
mbB
Widenmayerstraße 6
80538 München (DE)**

(54) **ADAPTIVE IN-LOOP FILTERING IN VIDEO ENCODING**

(57)     In some compression techniques, in-loop filters can be included to effectively remove coding artifacts and improve the objective quality measurement at the same time. To avoid increasing complexity in the encoder, a single pass encoding solution can be implemented to efficiently and effectively make reasonably optimal in-loop filtering decisions. The solution can improve the in-loop filtering bit usage (e.g., reduce bitrate) and reduce the complexity in the encoder at the same time.

FIG. 1

EP 4 637 147 A1

**Description**

<u>Background</u>

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an in-loop filter and in-loop filtering decision part of an encoder, according to some embodiments of the disclosure.
FIG. 5 illustrates in-loop filtering decision part, according to some embodiments of the disclosure.
FIG. 6 illustrates an in-loop filtering decision process, according to some embodiments of the disclosure.
FIG. 7 illustrates a method for determining one or more in-loop filtering decisions, according to some embodiments of the disclosure.
FIG. 8 depicts a block diagram of an exemplary computing device, according to some embodiments of the disclosure.

<u>Detailed Description</u>

*Overview*

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably. There are several frame types of picture types. I-frames or intra-frames may be least compressible and do not depend on other frames to decode. I-frames may include scene change frames. P-frames may depend on data from previous frames to decode and may be more compressible than I-frames. B-frames may depend on data from previous and forward frames to decode and may be more compressible than I-frames and P-frames. Other frame types may include reference B-frame and non-reference B-frame. P-frames and B-frames may be referred to as inter-frames. The order in which I-frames, P-frames, and B-frames are arranged may be referred to as a Group of Pictures (GOP). A slice may be a spatially distinct region of a frame that is encoded separately from any other region in the same frame.

In some cases, a frame may be partitioned into one or more blocks. Blocks may be used for block-based compression. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs). A CTU may be divided (separately for luma and chroma components) into Coding Tree Blocks (CTBs). A CTB can have a size of 64x64 pixels, 32x32 pixels, or 16x16 pixels. A CTB can be divided into Coding Units (CUs). A CU can be divided into Prediction Units (PUs) and/or discrete cosine transforms (DCT) Transform Units (TUs).

One of the tasks of an encoder in a video codec is to make encoding decisions at different levels for the video (e.g., sequence level, GOP level, frame/picture level, slice level, CTU level, CTB level, block level, CU level, PU level, TU level, etc.), based on a desired bitrate and/or desired (objective and/or subjective) quality. Making encoding decisions may include evaluating different options or parameter values for encoding the data, and determining optimal options or parameter values that may achieve the desired bitrate and/or quality. The chosen option and/or parameter values may be applied to encode the video to generate a bitstream. The chosen option and/or parameter values would be encoded in the bitstream to signal to a decoder how to decode the encoded bitstream in accordance with the encoding decisions which were made by the decoder. Modern codecs offer a wide range of options and parameter values. While evaluating all possible combinations of options and parameter values may yield the most optimal encoding decision, an encoder does not have unlimited resources to afford the complexity that would be required to make globally optimal encoding decisions.

In some compression techniques, in-loop filters, luma mapping with chroma scaling (LMCS) filter, deblocking filter, sample adaptive offset (SAO) filter, and adaptive loop filter (ALF), can be included to effectively remove coding artifacts and improve the objective quality measurement at the same time. For example, ALF may be applied to the SAO filtered blocks to effectively remove coding artifacts and improve the objective quality. Although the SAO plus ALF filtering can provide better coding gains in general, the coding gains of the two filters are often overlapped. Under many circumstances, the ALF filter by itself can provide similar quality improvement as the combined SAO and ALF filters. For these circumstances, the SAO used bits are wasted. Making an optimal joint filter decision can greatly increase complexity, so some encoders avoid the complexity by making the SAO decision and ALF decision sequentially. In other words, the SAO decision is made without considering the subsequent ALF filter decision. As a result, the decision is not optimal. The bits and processing time waste cannot be avoided.

To avoid increasing complexity in the encoder, a single pass encoding solution can be implemented to efficiently and effectively make reasonably optimal in-loop filtering decisions. The solution can improve the in-loop filtering bit usage (e.g., reduce bitrate) and reduce the complexity in the encoder at the same time.

In some embodiments, if the frame is an intra-frame or a scene change frame, the block level SAO decision would be made with a modified rate-distortion optimization (RDO) parameter. ALF decision would be made after the SAO decision. Herein, intra-frame may be a frame that has been labeled as an intra-frame, or a frame to be all intra-coded. Herein, a scene change frame may be a frame that represents a first frame representing a new scene being captured in a video or a sequence of video frames. A scene change may include content that is drastically different or has no (temporal) correlation with the content in a previous frame.

In some embodiments, if the frame is not an intra-frame or a scene change frame, the picture level or slice level SAO decision can be adaptively disabled if the corresponding picture level or slice level quantization parameter (QP) is larger than a content-dependent QP threshold (or frame classification dependent QP threshold). All block level SAO decision and syntax coding are skipped if picture level or slice level SAO is disabled. ALF decision would be made while the SAO block level SAO decision and syntax coding are skipped.

Techniques for making in-loop filtering decisions described and illustrated herein may be applied to a variety of codecs, such as AVC (Advanced Video Coding), HEVC (High Efficiency Video Coding), AV1 (AOMedia Video 1), and VVC (Versatile Video Coding). AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. VVC, also known as "ITU-T H.266", was finalized in 2020. While the techniques described herein relate to VVC, it is envisioned by the disclosure that the techniques may be applied to other codecs having SAO filter and ALF as in-loop filters.

_Video compression_

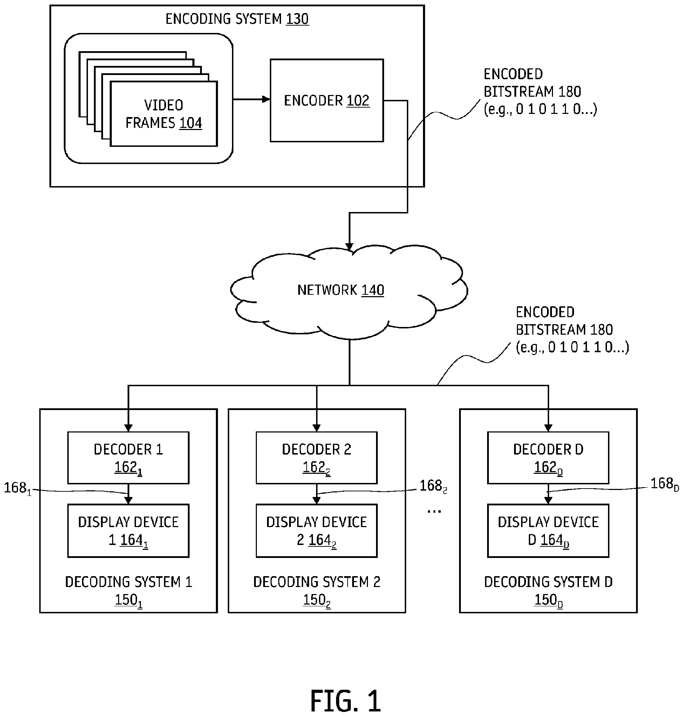

FIG. 1 illustrates encoding system 130 and one or more decoding systems $150_{1...D}$, according to some embodiments of the disclosure.

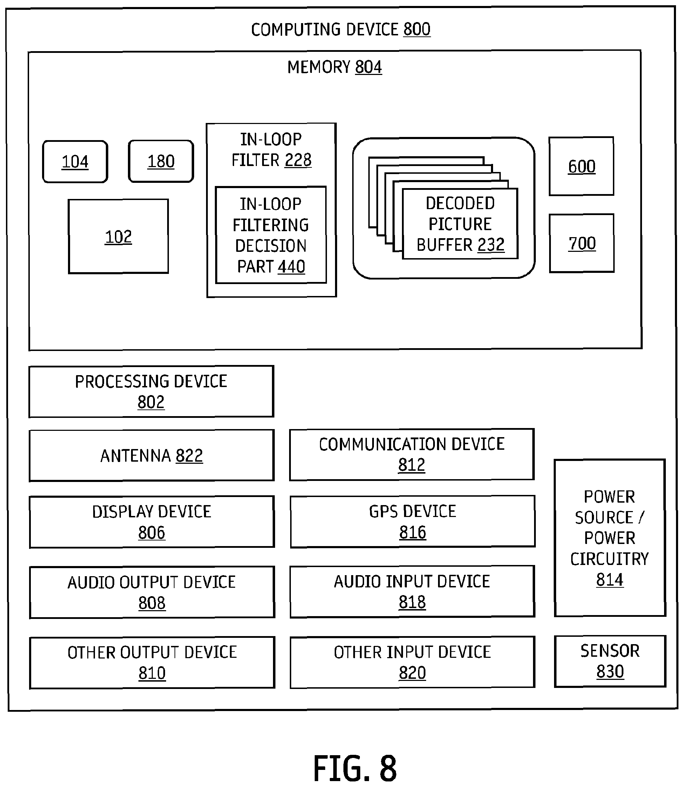

Encoding system 130 may be implemented on computing device 800 of FIG. 8. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen content, video conferencing content, live event broadcast content, sports content, a surveillance video, a video shot using a mobile computing device (e.g., a smartphone), etc. In some cases, video may include a mix or combination of different types of video.

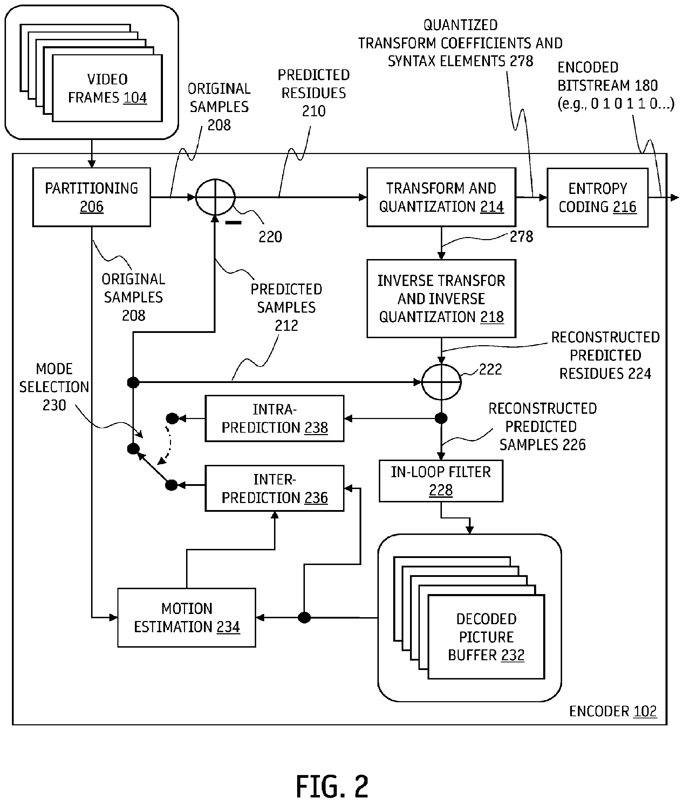

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems $150_{1...D}$, via network 140. Network 140 may be the Internet. Network 140 may include one or more of: cellular data networks, wireless data networks, wired data networks, cable Internet networks, fiber optic networks, satellite Internet networks, etc.

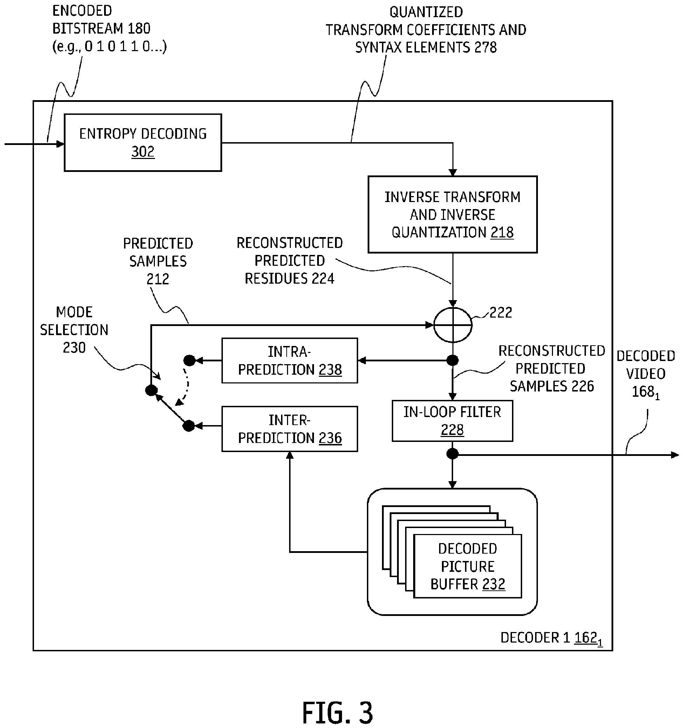

D number of decoding systems $150_{1...D}$ are illustrated. At least one of the decoding systems $150_{1...D}$ may be implemented on computing device 800 of FIG. 8. Examples of systems $150_{1...D}$ may include personal computers, mobile computing devices, gaming devices, augmented reality devices, mixed reality devices, virtual reality devices, televisions, etc. Each one of decoding systems $150_{1...D}$ may perform the process of decoding in video compression. Each one of decoding systems $150_{1...D}$ may include a decoder (e.g., decoder 1...D $162_{1...D}$), and one or more display devices (e.g., display device 1...D $164_{1...D}$). An exemplary implementation of a decoder, e.g., decoder 1 $162_1$, is illustrated in FIG. 3.

For example, decoding system 1 $150_1$, may include decoder 1 $162_1$ and a display device 1 $164_1$. Decoder 1 $162_1$ may implement a decoding process of video compression. Decoder 1 $162_1$ may receive encoded bitstream 180 and produce decoded video $168_1$. Decoded video $168_1$ may include a series of video frames, which may be a version or reconstructed version of video frames 104 encoded by encoding system 130. Display device 1 $164_1$ may output the decoded video $168_1$ for display to one or more human viewers or users of decoding system 1 $150_1$.

For example, decoding system 2 $150_2$, may include decoder 2 $162_2$ and a display device 2 $164_2$. Decoder 2 $162_2$ may implement a decoding process of video compression. Decoder 2 $162_2$ may receive encoded bitstream 180 and produce decoded video $168_2$. Decoded video $168_2$ may include a series of video frames, which may be a version or reconstructed version of video frames 104 encoded by encoding system 130. Display device 2 $164_2$ may output the decoded video $168_2$ for display to one or more human viewers or users of decoding system 2 $150_2$.

For example, decoding system D $150_D$, may include decoder D $162_D$ and a display device D $164_D$. Decoder D $162_D$ may implement a decoding process of video compression. Decoder D $162_D$ may receive encoded bitstream 180 and produce decoded video $168_D$. Decoded video $168_D$ may include a series of video frames, which may be a version or reconstructed version of video frames 104 encoded by encoding system 130. Display device D $164_D$ may output the decoded video $168_D$ for display to one or more human viewers or users of decoding system D $150_D$.

*Video encoder*

FIG. 2 illustrates encoder 102 to encode video frames and output an encoded bitstream, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of size 32x32 pixels or 16x16 pixels. In some cases, a frame may be partitioned by partitioning 206 into blocks of 256x256 or 512x512 pixels. Large blocks may be referred to as superblocks. Partitioning 206 may further divide each superblock using a multi-way partition tree structure. In some cases, a partition of a superblock can be recursively divided further by partitioning 206 using the multi-way partition tree structure (e.g., down to 4x4 size blocks). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4. Partitioning 206 may output original samples 208, e.g., as blocks of pixels.

Intra-prediction 238 may predict samples of a block from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame. Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-prediction 238 may support a number of diverse predictors, e.g., 56 different predictors. Some predictors, e.g., directional predictors, may capture different spatial redundancies in directional textures. Pixel values of a block can be predicted using a directional predictor in intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra-block copy, color palette, multiple-reference line, intra sub-partition, matrix-based intra-prediction (matrix coefficients may be defined by offline training using neural networks), wide-angle prediction, cross-component linear model, template matching, etc. In some cases, intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and inter-prediction 236 may predict samples of a block from samples of previously encoded frames, e.g., reference frames in decoded picture buffer 232. Motion estimation 234 and inter-prediction 236 may perform motion compensation, which may involve identifying a suitable reference block and a suitable motion predictor (or vector) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-prediction 236. Motion estimation 234 may implement compound reference frame prediction mode where two reference frames with two corresponding motion predictors are used for inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-prediction 236 and optionally applying an interpolation filter. In some cases, inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of DCT, asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

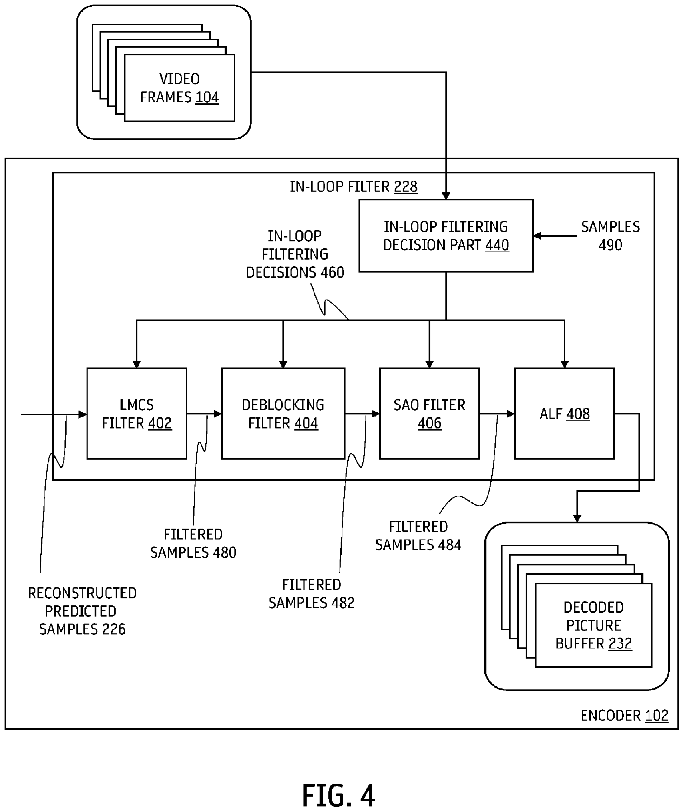

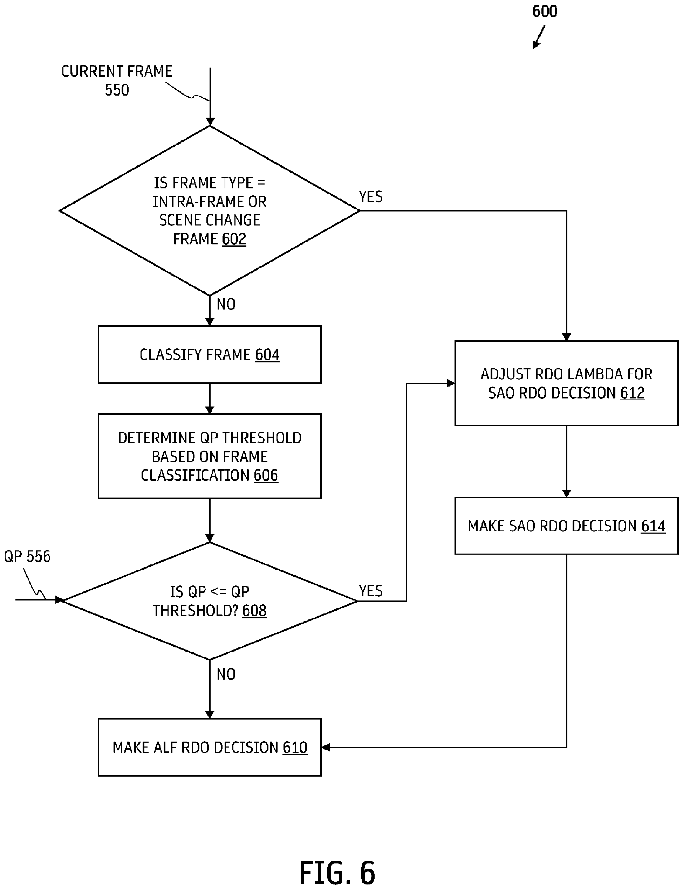

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS, SAO filter, ALF, cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232. A decision part of in-loop filter 228 for making one or more in-loop filtering decisions is illustrated and described in FIGS. 4-5. Operations that may be performed by the decision part are illustrated and described in FIGS. 6-7.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

*Video encoder*

FIG. 3 illustrates decoder 1 $162_1$ to decode an encoded bitstream and output a decoded video, according to some embodiments of the disclosure. Decoder 1 $162_1$ may include one or more of: signal processing operations and data processing operations, including entropy decoding, inverse transform, inverse quantization, inter and intra-prediction, in-loop filtering, etc. Decoder 1 $162_1$ may have signal and data processing operations that mirror the operations performed in the encoder. Decoder 1 $162_1$ may apply signal and data processing operations that are signaled in encoded bitstream 180 to reconstruct the video. Decoder 1 $162_1$ may receive encoded bitstream 180 and generate and output decoded video $168_1$ having a plurality of video frames. The decoded video $168_1$ may be provided to one or more display devices for display to one or more human viewers. Decoder 1 $162_1$ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in

decoder 1 162$_1$ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video 168$_1$.

*In-loop filtering and in-loop filtering decision making*

FIG. 4 illustrates in-loop filter 228 and in-loop filtering decision part 440 of encoder 102, according to some embodiments of the disclosure. In-loop filter 228 may be applied to reconstructed predicted samples 226, and post-filtering output may be output to decoded picture buffer 232. Decoded picture buffer 232 may be used as a reference for inter-prediction (e.g., inter-prediction 236 of FIG. 2). In some video compression techniques, in-loop filter 228 may include a pipeline or series of in-loop filters, which may be individually or selectively disabled or enabled by syntax elements in the encoded bitstream.

In VVC, the pipeline may include LMCS filter 402, deblocking filter 404, SAO filter 406, and ALF 408. The pipeline may apply filtering in the order shown (e.g., from left to right) on reconstructed predicted samples 226. SAO filter 406 may modify reconstructed predicted samples 226 after filter 404 is applied by adding offsets conditionally to each sample. Offsets may be applied based on edge direction/shape (edge offset (EO)). Offsets may be applied based on pixel level (band offset (BO)). SAO filter 406 can reduce the ringing artifact caused by large transforms and longer interpolation filters. SAO filter 406 can reduce the distortion between the original input signal and coded signal. Syntax elements comprising flags may be used to signal whether SAO filter 406 is enabled or disabled. In VVC, sps_sao_enabled_flag is used to enable this feature in the sequence header, picture parameter set (PPS) flag sao_info_in_ph_flag is used to indicate the luma and chroma SAO control flags are in picture header (PH) or in slice header (SH). If the flag is on, ph sao_luma flag and ph_sao_chroma_flag are used to adaptively enable it per picture, slice sao_luma flag and slice_sao_chroma_flag are used to adaptively enable it per slice. If SAO filter 406 is enabled in the current slice, SAO filter 406 is applied at coding tree unit (CTB) level. Each color component in a CTB has its own SAO parameters, including SAO type (e.g., on/off, EO, or BO classification) and corresponding EO related parameters and BO related parameters. Although SAO filter 406 can improve both the subjective and objective quality, its bit usage (i.e., the bits used for encoding the syntax elements, or SAO usage bits) as described here is not trivial. ALF 408 is applied to the SAO filtered blocks at the output of SAO filter 406 to further remove coding artifacts and improve the objective quality. ALF 408 may apply a diamond shape filter with specific coefficients selected based on the content of the data. Although the SAO filter 406 plus ALF 408 solution can still provide better coding gains in general than a single filter, the coding gains of the SAO filter 406 plus ALF 408 are often overlapped. Under some if not most circumstances, the ALF 408 by itself can provide a significant part if not a majority of quality improvement as the combined the SAO filter 406 plus ALF 408 solution. For these circumstances, the bits used for signaling SAO usage, or SAO used bits are wasted. It is also not practical to apply multi-pass encoding to determine an optimal joint filter decision for the SAO filter 406 and ALF 408.

In-loop filter 228 may include in-loop filtering decision part 440 to make one or more encoding decisions. In this case, in-loop filtering decision part 440 may make one or more in-loop filtering decisions 460. In-loop filtering decision part 440 may output one or more in-loop filtering decisions 460 to control LMCS filter 402, deblocking filter 404, SAO filter 406, and ALF 408. In-loop filtering decisions 460 may be encoded as syntax elements in the encoded bitstream. For example, one or more in-loop filtering decisions 460 may include decisions as to whether to enable or disable a particular in-loop filter, and parameter value(s) to be used with the particular in-loop filter. In-loop filtering decision part 440 may receive video frames 104. In-loop filtering decision part 440 may receive samples 490 such as reconstructed predicted samples 226, filtered samples 480, filtered samples 482, and filtered samples 484. In-loop filtering decision part 440 may use video frames 104 and/or samples 490 to determine an amount of distortion for a certain option and/or a certain parameter value to be used with an in-loop filter. In-loop filtering decision part 440 may perform rate-distortion optimization when making an in-loop filtering decision. RDO determines a trade-off between the bitrate (e.g., a compression rate), and the distortion (e.g., quality, objective quality, subjective quality, etc.) introduced by the compression process. The goal of RDO is to make an optimal encoding decision (in this case, one or more in-loop filtering decisions 460) that minimizes a rate-distortion cost function that balances bitrate and distortion in the following equation:

$$Cost = distortion + \lambda * bitrate \quad \textbf{(equation 1)}$$

*Cost* represents the rate-distortion cost. *distortion* represents the distortion (e.g., mean squared error, sum of absolute differences, objective quality loss, subjective quality loss, etc.). *bitrate* represents the bitrate, or a number of bits to encode the data. $\lambda$ or lambda is an RDO parameter (sometimes referred to as the Lagrangian multiplier) that can control or adjust the relative importance of bitrate versus distortion in the rate-distortion cost function. A higher value for $\lambda$ means more emphasis on reducing the bitrate. A lower value for $\lambda$ means more emphasis on reducing distortion.

The technical challenge for in-loop filtering decision part 440 to make in-loop filtering decisions for SAO filter 406 and ALF 408, in a single pass, is to identify scenarios where in-loop filtering decision for and usage of SAO filter 406 should be skipped so that SAO usage bits are not wasted. One insight is that if a frame is expected to have a relatively high bitrate, SAO usage bits would take up a small proportion of the total number of bits to encode the data. Therefore, enabling SAO filter 406 to improve quality and reduce distortion may be worthwhile. If SAO filter 406 is to be considered, the RDO decision for SAO filter 406 may be biased by increasing RDO parameter $\lambda$. Increasing RDO parameter $\lambda$ can place a bigger emphasis on reducing bitrate, so that SAO filter 406 may be enabled when distortion is relatively low. In-loop filtering decision part 440 can address this technical challenge by implementing operations and parts as described in FIGS. 4-7.

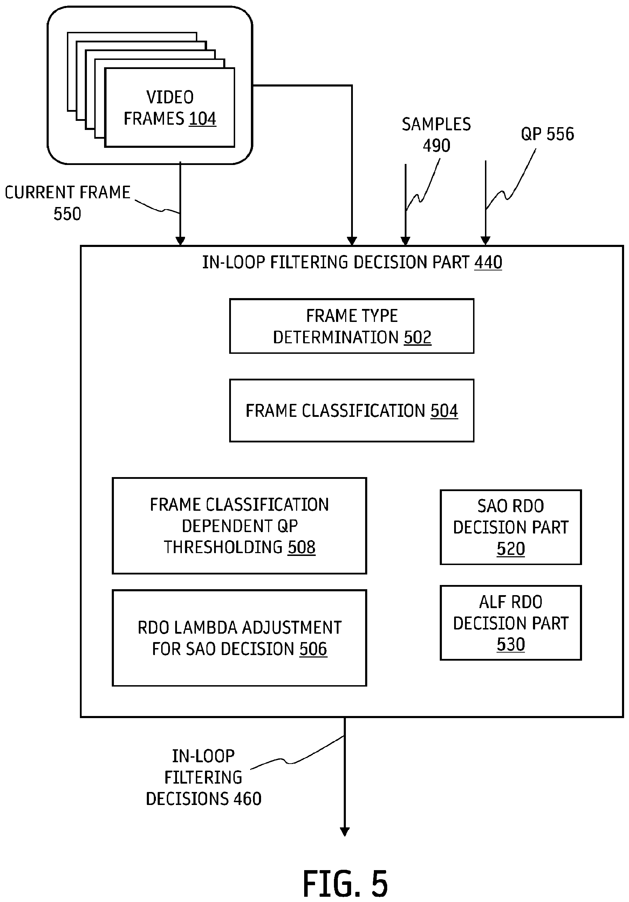

FIG. 5 illustrates in-loop filtering decision part 440, according to some embodiments of the disclosure. In-loop filtering decision part 440 may identify cases, using one or more heuristics, where in-loop filtering decision for and usage of SAO filter 406 should be skipped. In-loop filtering decision part 440 may receive information such as video frames 104 and samples 490. In-loop filtering decision part 440 may receive information such as QP 556. QP 556 may be a QP specified for a given frame or picture. QP 556 may be determined or specified by an encoding application, based on one or more target requirements for encoding video frames 104. QP 556 may be determined or specified by quantization 214 of FIG. 2. In-loop filtering decision part 440 may receive a current frame 550 to be encoded and encoding information associated with current frame 550. Encoding information may be provided by one or more components or parts in encoder 102 of FIG. 2. Encoding information may be determined by one or more components or parts in encoder 102 of FIG. 2. In-loop filtering decision part 440 may output one or more in-loop filtering decisions 460.

In-loop filtering decision part 440 may include frame type determination 502. Frame type determination 502 may receive current frame 550 to be encoded and encoding information associated with current frame 550. Frame type determination 502 may determine the frame type of current frame 550 from the encoding information associated with current frame 550. Current frame 550 can be associated with one or more frame types. Examples of frame types include: an intra-frame, or I-frame, a scene change frame (which may be an intra-frame), P-frame, B-frame, etc. Frame type determination 502 may determine that current frame 550 is an intra-frame. Frame type determination 502 may determine that current frame 550 is a scene change frame. Frame type determination 502 may determine that current frame 550 is an intra-frame or a scene change frame. Frame type determination 502 may determine that current frame 550 is not an intra-frame nor a scene change frame. For example, frame type determination 502 may determine current frame 550 is a P-frame. In another example, frame type determination 502 may determine current frame 550 is a B-frame.

In-loop filtering decision part 440 may include frame classification 504. Frame classification 504 may receive current frame 550 to be encoded and encoding information associated with current frame 550. Frame classification 504 may receive QP 556. In some embodiments, frame classification 504 may be optional. In some embodiments, frame classification 504 may classify current frame 550 and determine a frame classification for current frame 550. Current frame 550 may be classified to determine to which one of several possible frame classifications current frame 550 belongs.

Frame classification 504 may determine whether current frame 550 belongs to a frame classification based on one or more of spatial variation (an amount of spatial variation) and temporal variation (an amount of temporal variation). Frame classification 504 may analyze current frame 550 to determine the one or more of spatial variation and temporal variation. In some cases, frame classification 504 may determine the one or more of spatial variation and temporal variation from the encoding information associated with current frame 550. In some examples, possible frame classifications may include: (1) static or very minor movements, and (2) high motion with strong edges. In some examples, possible frame classifications may include (1) static or very minor movements, (2) high motion with strong edges, (3) other frames that do not belong to classification (1) and classification (2).

Frame classification 504 may determine whether current frame 550 belongs to a frame classification based on a resolution of current frame 550. Frame classification 504 may compare the resolution of current frame 550 against one or more thresholds, or determine whether the resolution of current frame 550 falls within one or more ranges. In some examples, possible frame classifications may include: (1) relatively high resolution or resolution is above a first resolution threshold, and (2) relatively low resolution or resolution is below the first resolution threshold. In some examples, possible frame classifications may include: (1) resolution is within a first range, and (2) resolution is within a second range. In some examples, possible frame classifications may include (1) relatively high resolution or resolution is above a first resolution threshold, (2) medium resolution or resolution is below the first resolution threshold and above a second resolution threshold, (3) relatively low resolution or resolution is below the second resolution threshold. The first resolution threshold is greater than the second resolution threshold. In some examples, possible frame classifications may include (1) resolution within a first range, (2) resolution within a second range, (3) resolution within a third range.

In-loop filtering decision part 440 may include frame classification dependent QP thresholding 508. Frame classification dependent QP thresholding 508 may set a QP threshold to a value that corresponds to the frame classification the frame classification determined in frame classification 504. QP 556 of current frame may be compared against the frame classification dependent QP threshold set in frame classification dependent QP thresholding 508.

In embodiments where frame classification 504 may be omitted, frame classification dependent QP thresholding 508 may set a QP threshold to a predetermined value.

In some embodiments, the QP threshold may be set higher, by frame classification dependent QP thresholding 508, when the frame classification indicates that the more bits are expected used to encode content in current frame 550. The QP threshold may be set lower, by frame classification dependent QP thresholding 508, when the frame classification indicates that fewer bits are expected used to encode content in current frame 550. Setting frame classification dependent QP threshold based on the frame classification may ensure that the QP threshold can adapt to the content of current frame 550.

One or more of frame type determination 502, frame classification 504, and frame classification dependent QP thresholding 508 may be used to extract one or more heuristics about current frame 550 that may impact how one or more in-loop filtering decisions 460 would be made. The heuristics may indicate scenarios where in-loop filtering decision for and usage of SAO filter 406 should be skipped. The heuristics may indicate scenarios where SAO usage bits may take up too much of the bitrate budget to encode current frame 550.

In-loop filtering decision part 440 may include RDO lambda adjustment for SAO decision 506. In scenarios where SAO RDO decision part 520 processing is not skipped, RDO lambda adjustment for SAO decision 506 may adjust the RDO parameter $\lambda$ used in the rate-distortion cost calculation. As illustrated in equation 1, the RDO parameter $\lambda$ is a multiplier for bitrate in the rate-distortion cost calculation. The RDO parameter $\lambda$ may be preset according to QP 556. RDO lambda adjustment for SAO decision 506 may increase the preset value for RDO parameter $\lambda$ by a certain amount. The certain amount may be increased using a multiplier or a scaling factor. The multiplier or a scaling factor may be greater than 1. Increasing the preset value for RDO parameter $\lambda$ by a certain amount may include multiplying the preset value for RDO parameter $\lambda$ by the multiplier or scaling factor. In some cases, RDO lambda adjustment for SAO decision 506 may decrease the preset value for RDO parameter $\lambda$ by a certain amount. The certain amount may be predetermined. RDO lambda adjustment for SAO decision 506 may determine the certain amount based on encoding information associated with current frame 550. RDO lambda adjustment for SAO decision 506 may determine the certain amount based on QP 556. RDO lambda adjustment for SAO decision 506 may determine the certain amount based on frame classification determined in frame classification 504. RDO lambda adjustment for SAO decision 506 may determine the certain amount based on frame type determined in frame type determination 502. RDO lambda adjustment for SAO decision 506 may adjust the RDO parameter $\lambda$ using a scaling factor S1 in response to determining that the frame type is an intra-frame or a scene change frame. RDO lambda adjustment for SAO decision 506 may adjust the RDO parameter $\lambda$ using a scaling factor S2 in response to determining that the frame type is not an intra-frame nor a scene change frame (that the frame type is an inter-frame such as P-frame or B-frame), and that the QP parameter is less than or equal to the QP parameter threshold. The amounts may have the following relationship: $S2 > S1 \geq 1$.

In-loop filtering decision part 440 may include SAO RDO decision part 520. SAO RDO decision part 520 may evaluate options and/or parameter value(s) and make an SAO RDO decision according to the rate-distortion cost function of equation 1. The SAO RDO decision may specify whether to enable SAO filtering. The SAO RDO decision may specify one or more parameter values associated with the SAO filter to be applied. SAO RDO decision part 520 may evaluate the various options and/or parameter values for the SAO filter according to the rate-distortion cost function with the RDO parameter $\lambda$. SAO RDO decision part 520 may select the option and/or parameter value(s) that result in the lowest rate-distortion cost and output the selected option and/or parameter value(s) as the SAO RDO decision in one or more in-loop filtering decisions 460.

In-loop filtering decision part 440 may include ALF RDO decision part 530. ALF RDO decision part 530 may evaluate options and/or parameter value(s) and make an ALF RDO decision according to the rate-distortion cost function of equation 1. The ALF RDO decision may specify whether to enable ALF. The ALF RDO decision may specify one or more parameter values associated with the ALF to be applied. ALF RDO decision part 530 may evaluate the various options and/or parameter values for the ALF filter according to the rate-distortion cost function with the RDO parameter $\lambda$. ALF RDO decision part 530 may select the option and/or parameter value(s) that result in the lowest rate-distortion cost and output the selected option and/or parameter value(s) as the ALF RDO decision in one or more in-loop filtering decisions 460.

*Exemplary in-loop filtering decision making processes and methods*

FIG. 6 illustrates an in-loop filtering decision process 600, according to some embodiments of the disclosure. In-loop filtering decision process 600 may be implemented by one or more parts or components illustrated in in-loop filtering decision part 440 of FIG. 4. In-loop filtering decision process 600 may be encoded as instructions on memory 804, which may be executed by processing device 802 of computing device 800 of FIG. 8.

In 602, frame type of current frame 550 may be checked. It may be determined whether current frame 550 is an intra-frame or a scene change frame. In response to determining current frame 550 is an intra-frame or a scene change frame, the process 600 proceeds via the "YES" path from 602 to 612. Proceeding via the "YES" path can mean that SAO filtering is enabled at a picture level, and different options and/or parameter value(s) may be evaluated for CTBs of the picture. In response to determining current frame 550 is not an intra-frame nor a scene change frame, the process 600 proceeds via the "NO" path from 602 to 604. Proceeding via the "NO" path means that one or more other heuristics is evaluated for current frame 550.

In 612, RDO parameter $\lambda$ may be adjusted, e.g., increased. Adjusting RDO parameter $\lambda$ may encourage SAO filtering to be used when SAO filtering would result in very little syntax bits increase.

In 614, SAO RDO decision may be made using the adjusted RDO parameter $\lambda$ from 612.

In 604, current frame 550 may be classified, or a frame classification is determined for current frame 550. In some cases, 604 may be omitted.

In 606, a QP threshold may be determined based on the frame classification determined in 604. In cases where 604 is omitted, the QP threshold be set based on a predetermined value. In some embodiments, different frame classifications may have associated threshold values. The QP threshold may adapt to the frame classification determined in 604.

In some embodiments, possible frame classifications may include (1) static or very minor movements, (2) high motion with strong edges, (3) other frames that do not belong to frame classification (1) and frame classification (2). The QP threshold for frame classification (1) may be set to a value of T1. An example of frames belonging to frame classification (1) includes video conference clips. An example of frames belonging to frame classification (2) includes live event videos (e.g., sports, concert, news, etc.). The QP threshold for frame classification (2) may be set to a value of T2. The QP threshold for frame classification (3) may be set to a value of T3. The QP threshold values may have the following relationship: $T2 > T3 \geq T1$.

In some embodiments, possible frame classifications may include (1) relatively high resolution or resolution is above a first resolution threshold, and (2) relatively low resolution or resolution is below the first resolution threshold. The QP threshold for frame classification (1) may be set to a value of T1. The QP threshold for frame classification (2) may be set to a value of T2. The QP threshold values may have the following relationship: $T1 \geq T2$.

In 608, QP 556 may be compared against the QP threshold determined in 606. It may be determined whether QP 556 is greater than the QP threshold. It may be determined whether QP 556 is less than or equal to the QP threshold. In response to determining that QP 556 is greater than the QP threshold, the process 600 proceeds via the "NO" path from 608 to 610. Proceeding via the "NO" path can mean that SAO filtering is skipped or disabled at a picture level, and different options and/or parameter value(s) for SAO filtering would not be evaluated for CTBs of the picture. No SAO usage bits would be used. In response to determining QP 556 is less than or equal to the QP threshold, the process 600 proceeds via the "YES" path from 608 to 612. Proceeding via the "YES" path means that that SAO filtering is applied at a picture level, and different options and/or parameter value(s) for SAO filtering would be evaluated for CTBs of the picture. Proceeding via the "YES" path means that RDO parameter $\lambda$ may be adjusted for the SAO RDO decision.

When QP 556 is greater than the QP threshold (corresponding to the "NO" path from 608), it means that encoder is targeting to use relatively fewer bits to encode the content of current frame 550, and SAO usage bits could take up a significant portion of the number of bits to be used to encode current frame 550. Therefore, it may be desirable to skip SAO filtering and not waste SAO usage bits.

When QP 556 is less than or equal to the QP threshold (corresponding to the "YES" path from 608), it means that the encoder is targeting to use relatively more bits to encode the content of current frame 550, and SAO usage bits could take up a small or insignificant portion of the number of bits to be used to encode current frame 550. Therefore, it may be desirable to apply SAO filtering and incur SAO usage bits.

The value of the QP threshold can impact whether to take the "YES" path from 608 or the "NO" path from 612. The value of the QP threshold can decide whether SAO filter is to be skipped or not. Different types of content in current frame 550 may lead to more bits or fewer bits being used to encode the content of current frame 550. Therefore, it may be desirable to adapt the QP threshold to the content of current frame 550. When content in current frame 550 is spatially/temporally complex and/or resolution is high, more bits may be needed to encode the content of current frame 550 and QP threshold may be set higher. When content in current frame 550 is not spatially/temporally complex and/or resolution is low, fewer bits may be needed to encode the content of current frame 550 and QP threshold may be set lower.

When the QP threshold is higher (making it easier to find QP 556 to be less than or equal to QP threshold), SAO filtering would be encouraged to be enabled. When the QP threshold is lower (making it easier to find QP 556 to be greater than QP threshold), SAO filtering would be encouraged to be skipped.

In 610, ALF RDO decision may be made using a suitable RDO parameter. In some cases, if the ALF RDO decision is to not use or enable ALF, the ALF RDO decision may cause the SAO RDO decision to enable SAO filtering at the picture level.

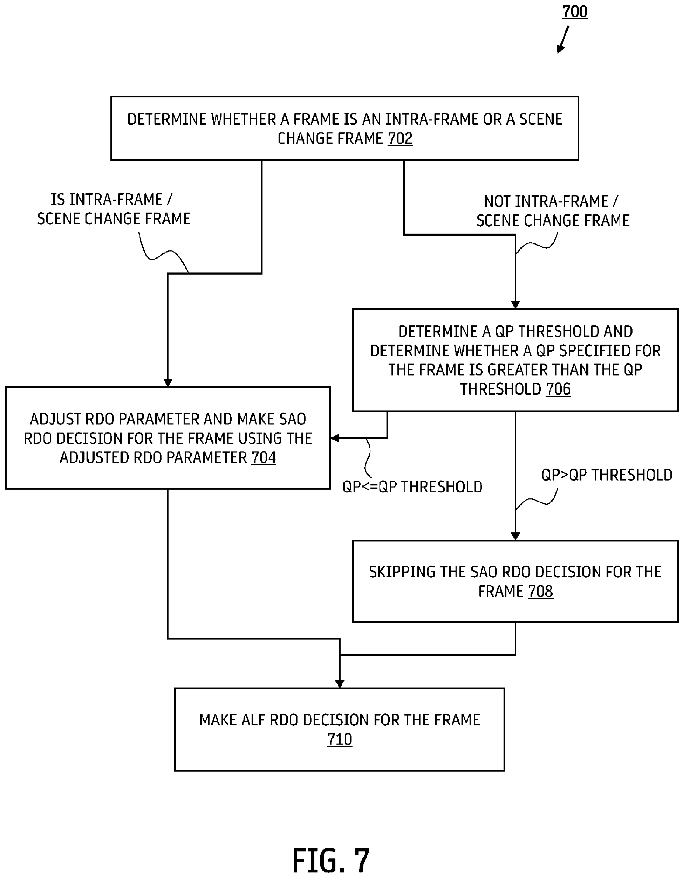

FIG. 7 illustrates method 700 for determining one or more in-loop filtering decisions, according to some embodiments of the disclosure. Method 700 may be implemented by one or more parts or components illustrated in in-loop filtering decision part 440 of FIG. 4. Method 700 may be encoded as instructions on memory 804, which may be executed by processing device 802 of computing device 800 of FIG. 8.

In 702, in-loop filtering decision part 440 may determine whether a frame is an intra-frame or a scene change frame.

In 704, in response to determining the frame is an intra-frame or a scene change frame, in-loop filtering decision part 440 may adjust an RDO parameter by a first amount. In-loop filtering decision part 440 may make an SAO RDO decision for the frame using the adjusted RDO parameter.

In 706, in response to determining the frame is not an intra-frame nor a scene change frame, in-loop filtering decision part 440 may determine a QP threshold. In-loop filtering decision part 440 may determine whether a QP specified for the frame is greater than the QP threshold.

In 708, in response to determining the QP is greater than the QP threshold, skipping the SAO RDO decision for the frame.

In 710, in response to determining the frame is an intra-frame or a scene change frame, in-loop filtering decision part 440 may make an ALF RDO decision for the frame.

In 710, in response to determining the QP is greater than the QP threshold, in-loop filtering decision part 440 may make an ALF RDO decision for the frame.

In 704, in response to determining the QP is less than or equal to the QP threshold, in-loop filtering decision part 440 may adjust the RDO parameter by a second amount. The second amount may be greater than the first amount. In-loop filtering decision part 440 may make the SAO RDO decision for the frame using the adjusted RDO parameter. In 710, in-loop filtering decision part 440 may make an ALF RDO decision for the frame.

*Exemplary computing device*

FIG. 8 is a block diagram of an apparatus or a system, e.g., an exemplary computing device 800, according to some embodiments of the disclosure. One or more computing devices 800 may be used to implement the functionalities described with the FIGS. and herein. A number of components are illustrated in the FIGS. can be included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, and the computing device 800 may include interface circuitry for coupling to the one or more components. For example, the computing device 800 may not include a display device 806, and may include display device interface circuitry (e.g., a connector and driver circuitry) to which a display device 806 may be coupled. In another set of examples, the computing device 800 may not include an audio input device 818 or an audio output device 808 and may include audio input or output device interface circuitry (e.g., connectors and supporting circuitry) to which an audio input device 818 or audio output device 808 may be coupled.

The computing device 800 may include a processing device 802 (e.g., one or more processing devices, one or more of the same type of processing device, one or more of different types of processing device). The processing device 802 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 802 may include a CPU, a GPU, a quantum processor, a machine learning processor, an artificial intelligence processor, a neural-network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 804 includes one or more non-transitory computer-readable storage media. In some embodiments, memory 804 may include memory that shares a die with the processing device 802.

In some embodiments, memory 804 includes one or more non-transitory computer-readable media storing instructions executable to perform operations described herein, such as operations illustrated in FIGS. 1-7, in-loop filtering decision process 600, and method 700. In some embodiments, memory 804 includes one or more non-transitory computer-readable media storing instructions executable to perform one or more operations of encoder 102. In some embodiments, memory 804 includes one or more non-transitory computer-readable media storing instructions executable to perform one or more operations of in-loop filtering decision part 440. In some embodiments, memory 804 includes one or more non-transitory computer-readable media storing instructions executable to perform one or more operations of in-loop filter 228. The instructions stored in memory 804 may be executed by processing device 802.

In some embodiments, memory 804 may store data, e.g., data structures, binary data, bits, metadata, files, blobs, etc., as described with the FIGS. and herein. Memory 804 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 804 may include one or more non-transitory computer-readable media storing one or more of: data received and/or data generated by in-loop filtering decision process 600 of FIG. 6. Memory 804 may include one or more non-transitory computer-readable media storing one or more of: data received and/or data generated by method 700 of FIG. 7. Memory 804 may include decoded picture buffer 232.

In some embodiments, the computing device 800 may include a communication device 812 (e.g., one or more communication devices). For example, the communication device 812 may be configured for managing wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 812 may operate in accordance with other wireless protocols in other embodiments. The computing device 800 may include an antenna 822 to facilitate wireless communications and/or to receive other wireless communications (such as radio frequency transmissions). Computing device 800 may include receiver circuits and/or transmitter circuits. In some embodiments, the communication device 812 may manage wired communications, such as electrical, optical, or any other suitable communication protocols (e.g., the Ethernet). As noted above, the communication device 812 may include multiple communication chips. For instance, a first communication device 812 may be dedicated to shorter-range wireless communications such as Wi-Fi or Bluetooth, and a second communication device 812 may be dedicated to longer-range wireless communications such as global positioning system (GPS), EDGE, GPRS, CDMA, WiMAX, LTE, EV-DO, or others. In some embodiments, a first communication device 812 may be dedicated to wireless communications, and a second communication device 812 may be dedicated to wired communications.

The computing device 800 may include power source / power circuitry 814. The power source / power circuitry 814 may include one or more energy storage devices (e.g., batteries or capacitors) and/or circuitry for coupling components of the computing device 800 to an energy source separate from the computing device 800 (e.g., DC power, AC power, etc.).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include a sensor 830 (or one or more sensors). The computing device 800 may include corresponding interface circuitry, as discussed above). Sensor 830 may sense physical phenomenon and translate the physical phenomenon into electrical signals that can be processed by, e.g., processing device 802. Examples of sensor 830 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 800 may include another output device 810 (or corresponding interface circuitry, as discussed above). Examples of the other output device 810 may include an audio codec, a video codec, a printer, a wired or wireless transmitter for providing information to other devices, haptic output device, gas output device, vibrational output device, lighting output device, home automation controller, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 800 may be any other electronic device that processes data.

*Select examples*

Example 1 provides a method, including determining whether a frame is an intra-frame or a scene change frame; in response to determining the frame is the intra-frame or the scene change frame, adjusting a rate-distortion optimization (RDO) parameter by a first amount, and making a sample adaptive offset (SAO) RDO decision for the frame using the adjusted RDO parameter; and in response to determining the frame is not the intra-frame nor the scene change frame: determining a quantization parameter (QP) threshold; determining whether a QP specified for the frame is greater than the QP threshold; and in response to determining the QP is greater than the QP threshold, skipping the SAO RDO decision for the frame.

Example 2 provides the method of example 1, further including in response to determining the frame is the intra-frame or the scene change frame, making an adaptive loop filter (ALF) RDO decision for the frame.

Example 3 provides the method of example 1 or 2, where: the RDO parameter is a multiplier for a bitrate; and adjusting the RDO parameter includes increasing a value of the RDO parameter by the first amount.

Example 4 provides the method of any one of examples 1-3, further including in response to determining the QP is greater than the QP threshold, making an ALF RDO decision for the frame.

Example 5 provides the method of any one of examples 1-4, further including in response to determining the QP is less than or equal to the QP threshold, adjusting the RDO parameter by a second amount, making the sample adaptive offset (SAO) RDO decision for the frame using the adjusted RDO parameter, and making an ALF RDO decision for the frame.

Example 6 provides the method of example 5, where the second amount is greater than the first amount.

Example 7 provides the method of any one of examples 1-6, where determining the QP threshold includes setting the QP threshold to a predetermined value.

Example 8 provides the method of any one of examples 1-7, where determining the QP threshold includes determining a frame classification for the frame based on one or more of: spatial variation, and temporal variation; and setting the QP threshold to a value that corresponds to the frame classification.

Example 9 provides the method of any one of examples 1-8, where determining the QP threshold includes determining a frame classification for the frame based on a resolution of the frame; and setting the QP threshold to a value that corresponds to the frame classification.

Example 10 provides one or more non-transitory computer-readable media storing instructions that, when executed by one or more processors, cause the one or more processors to: determine whether a frame is an intra-frame or a scene change frame; in response to determining the frame is the intra-frame or the scene change frame, adjust a rate-distortion optimization (RDO) parameter by a first amount, and making a sample adaptive offset (SAO) RDO decision for the frame using the adjusted RDO parameter; and in response to determining the frame is not the intra-frame nor the scene change frame: determine a quantization parameter (QP) threshold; determine whether a QP specified for the frame is greater than the QP threshold; and in response to determining the QP is greater than the QP threshold, skip the SAO RDO decision for the frame.

A variation of example 10 provides one or more non-transitory computer-readable media storing instructions that, when executed by one or more processors, cause the one or more processors to: determine whether a frame is an intra-frame or a scene change frame; in response to determining the frame is the intra-frame or the scene change frame, adjust a rate-distortion optimization (RDO) parameter by a first amount, and making a sample adaptive offset (SAO) RDO decision for the frame using the adjusted RDO parameter, wherein the RDO parameter is a multiplier for a bitrate; and in response to determining the frame is not the intra-frame nor the scene change frame: determine a quantization parameter (QP) threshold; determine whether a QP specified for the frame is greater than the QP threshold; and in response to determining the QP is greater than the QP threshold, skip the SAO RDO decision for the frame.

Example 11 provides the one or more non-transitory computer-readable media of example 10, where the instructions further cause the one or more processors to: in response to determining the frame is the intra-frame or the scene change frame, make an adaptive loop filter (ALF) RDO decision for the frame.

Example 12 provides the one or more non-transitory computer-readable media of example 10 or 11, where: the RDO parameter is a multiplier for a bitrate; and adjusting the RDO parameter includes increasing a value of the RDO parameter by the first amount.

Example 13 provides the one or more non-transitory computer-readable media of any one of examples 10-12, where the instructions further cause the one or more processors to: in response to determining the QP is greater than the QP threshold, making an ALF RDO decision for the frame.

Example 14 provides the one or more non-transitory computer-readable media of any one of examples 10-13, where the instructions further cause the one or more processors to: in response to determining the QP is less than or equal to the QP threshold, adjusting the RDO parameter by a second amount, making the sample adaptive offset (SAO) RDO decision for the frame using the adjusted RDO parameter, and making an ALF RDO decision for the frame.

Example 15 provides the one or more non-transitory computer-readable media of example 14, where the second amount is greater than the first amount.

Example 16 provides the one or more non-transitory computer-readable media of any one of examples 10-15, where determining the QP threshold includes setting the QP threshold to a predetermined value.

Example 17 provides the one or more non-transitory computer-readable media of any one of examples 10-16, where determining the QP threshold includes determining a frame classification for the frame based on one or more of: spatial variation, and temporal variation; and setting the QP threshold to a value that corresponds to the frame classification.

Example 18 provides the one or more non-transitory computer-readable media of any one of examples 10-17, where determining the QP threshold includes determining a frame classification for the frame based on a resolution of the frame; and setting the QP threshold to a value that corresponds to the frame classification.

Example 19 provides a system, including one or more processors; and one or more non-transitory computer-readable media storing instructions that, when executed by the one or more processors, cause the one or more processors to: determine whether a frame is an intra-frame or a scene change frame; in response to determining the frame is the intra-frame or the scene change frame, adjust a rate-distortion optimization (RDO) parameter by a first amount, and making a sample adaptive offset (SAO) RDO decision for the frame using the adjusted RDO parameter; and in response to determining the frame is not the intra-frame nor the scene change frame: determine a quantization parameter (QP) threshold; determine whether a QP specified for the frame is greater than the QP threshold; and in response to determining the QP is greater than the QP threshold, skip the SAO RDO decision for the frame.

A variation of example 19 provides a system, comprising: one or more processors; and one or more non-transitory computer-readable media storing instructions that, when executed by the one or more processors, cause the one or more processors to: determine whether a frame is an intra-frame or a scene change frame; in response to determining the frame is the intra-frame or the scene change frame, increasing a rate-distortion optimization (RDO) parameter by a first amount, and making a sample adaptive offset (SAO) RDO decision for the frame using the increased RDO parameter; and in response to determining the frame is not the intra-frame nor the scene change frame: determine a quantization parameter (QP) threshold; determine whether a QP specified for the frame is greater than the QP threshold; and in response to determining the QP is greater than the QP threshold, skip the SAO RDO decision for the frame.

Example 20 provides the system of example 19, where the instructions further cause the one or more processors to: in response to determining the frame is an intra-frame or a scene change frame, make an adaptive loop filter (ALF) RDO decision for the frame.

Example 21 provides the system of example 19 or 20, where: the RDO parameter is a multiplier for a bitrate; and adjusting the RDO parameter includes increasing a value of the RDO parameter by the first amount.

Example 22 provides the system of any one of examples 19-21, where the instructions further cause the one or more processors to: in response to determining the QP is greater than the QP threshold, making an ALF RDO decision for the frame.

Example 23 provides the system of any one of examples 19-22, where the instructions further cause the one or more processors to: in response to determining the QP is less than or equal to the QP threshold, adjusting the RDO parameter by a second amount, making the sample adaptive offset (SAO) RDO decision for the frame using the adjusted RDO parameter, and making an ALF RDO decision for the frame.

Example 24 provides the system of example 23, where the second amount is greater than the first amount.

Example 25 provides the system of any one of examples 19-24, where determining the QP threshold includes setting the QP threshold to a predetermined value.

Example 26 provides the system of any one of examples 19-25, where determining the QP threshold includes determining a frame classification for the frame based on one or more of: spatial variation, and temporal variation; and setting the QP threshold to a value that corresponds to the frame classification.

Example 27 provides the system of any one of examples 19-26, where determining the QP threshold includes determining a frame classification for the frame based on a resolution of the frame; and setting the QP threshold to a value that corresponds to the frame classification.

Example A provides an apparatus comprising means to carry out or means for carrying out any one of the methods provided in examples 1-9 and methods/processes described herein.

Example B provides one or more non-transitory computer-readable media storing instructions that, when executed by one or more processors, cause the one or more processors to perform any one of the methods provided in examples 1-9 and methods/processes described herein.

Example C provides an apparatus, comprising: one or more processors to execute instructions, and one or more non-transitory computer-readable media storing the instructions that, when executed by one or more processors, cause the one or more processors to perform any one of the methods provided in examples 1-9 and methods/processes described herein.

Example D provides an encoder to generate an encoded bitstream using operations described herein.

Example E provides an encoder to perform any one of the methods provided in examples 1-9 and methods/processes described herein.

Example F provides an in-loop filtering decision part 440 as described herein.

*Variations and other notes*

Although the operations of the example method shown in and described with reference to FIGS. 6-7 are illustrated as occurring once each and in a particular order, it will be recognized that some operations may be performed in any suitable order and repeated as desired. Additionally, one or more operations may be performed in parallel. Furthermore, the operations illustrated in FIGS. 6-7 or other FIGS. may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:

   determining whether a frame is an intra-frame or a scene change frame;
   in response to determining the frame is the intra-frame or the scene change frame, adjusting a rate-distortion optimization (RDO) parameter by a first amount, and making a sample adaptive offset (SAO) RDO decision for the frame using the adjusted RDO parameter; and
   in response to determining the frame is not the intra-frame nor the scene change frame:

   determining a quantization parameter (QP) threshold;
   determining whether a QP specified for the frame is greater than the QP threshold; and
   in response to determining the QP is greater than the QP threshold, skipping the SAO RDO decision for the frame.

2. The method of claim 1, further comprising:
   in response to determining the frame is the intra-frame or the scene change frame, making an adaptive loop filter (ALF) RDO decision for the frame.

3. The method of claim 1 or 2, wherein:

   the RDO parameter is a multiplier for a bitrate; and
   adjusting the RDO parameter comprises increasing a value of the RDO parameter by the first amount.

4. The method of any one of claims 1-3, further comprising:
   in response to determining the QP is greater than the QP threshold, making an ALF RDO decision for the frame.

5. The method of any one of claims 1-4, further comprising:
   in response to determining the QP is less than or equal to the QP threshold, adjusting the RDO parameter by a second amount, making the sample adaptive offset (SAO) RDO decision for the frame using the adjusted RDO parameter, and making an ALF RDO decision for the frame.

6. The method of claim 5, wherein the second amount is greater than the first amount.

7. The method of any one of claims 1-6, wherein determining the QP threshold comprises:
   setting the QP threshold to a predetermined value.

8. The method of any one of claims 1-7, wherein determining the QP threshold comprises:

   determining a frame classification for the frame based on one or more of: spatial variation, and temporal variation; and
   setting the QP threshold to a value that corresponds to the frame classification.

9. The method of any one of claims 1-8, wherein determining the QP threshold comprises:

   determining a frame classification for the frame based on a resolution of the frame; and
   setting the QP threshold to a value that corresponds to the frame classification.

10. One or more non-transitory computer-readable media storing instructions that, when executed by one or more processors, cause the one or more processors to perform a method as claimed in any preceding claim.

11. A system, comprising:

    one or more processors; and
    one or more non-transitory computer-readable media storing instructions that, when executed by the one or more processors, cause the one or more processors to perform a method as claimed in any one of claims 1-9.

12. An apparatus comprising means to perform a method as claimed in any one of claims 1-9.

13. A computer program comprising instructions, which, when the program is executed by a computer, cause the computer to carry out the method as claimed in any one of claims 1-9.

FIG. 1

FIG. 2

ENCODED
BITSTREAM 180
(e.g., 0 1 0 1 1 0...)

QUANTIZED
TRANSFORM COEFFICIENTS AND
SYNTAX ELEMENTS 278

ENTROPY DECODING
302

INVERSE TRANSFORM
AND INVERSE
QUANTIZATION 218

PREDICTED
SAMPLES
212

RECONSTRUCTED
PREDICTED
RESIDUES 224

MODE
SELECTION
230

222

INTRA-
PREDICTION 238

RECONSTRUCTED
PREDICTED
SAMPLES 226

DECODED
VIDEO
168₁

INTER-
PREDICTION 236

IN-LOOP FILTER
228

DECODED
PICTURE
BUFFER 232

DECODER 1 162₁

FIG. 3

FIG. 4

**FIG. 5**

600

CURRENT FRAME
550

IS FRAME TYPE =
INTRA-FRAME OR
SCENE CHANGE
FRAME 602 — YES →

NO

CLASSIFY FRAME 604

DETERMINE QP THRESHOLD
BASED ON FRAME
CLASSIFICATION 606

QP 556

IS QP <= QP
THRESHOLD? 608 — YES →

NO

ADJUST RDO LAMBDA FOR
SAO RDO DECISION 612

MAKE SAO RDO DECISION 614

MAKE ALF RDO DECISION 610

FIG. 6

700

DETERMINE WHETHER A FRAME IS AN INTRA-FRAME OR A SCENE CHANGE FRAME 702

IS INTRA-FRAME / SCENE CHANGE FRAME

NOT INTRA-FRAME / SCENE CHANGE FRAME

DETERMINE A QP THRESHOLD AND DETERMINE WHETHER A QP SPECIFIED FOR THE FRAME IS GREATER THAN THE QP THRESHOLD 706

ADJUST RDO PARAMETER AND MAKE SAO RDO DECISION FOR THE FRAME USING THE ADJUSTED RDO PARAMETER 704

QP<=QP THRESHOLD

QP>QP THRESHOLD

SKIPPING THE SAO RDO DECISION FOR THE FRAME 708

MAKE ALF RDO DECISION FOR THE FRAME 710

FIG. 7

COMPUTING DEVICE 800

MEMORY 804

104

180

IN-LOOP FILTER 228

IN-LOOP FILTERING DECISION PART 440

102

DECODED PICTURE BUFFER 232

600

700

PROCESSING DEVICE 802

ANTENNA 822

COMMUNICATION DEVICE 812

DISPLAY DEVICE 806

GPS DEVICE 816

POWER SOURCE / POWER CIRCUITRY 814

AUDIO OUTPUT DEVICE 808

AUDIO INPUT DEVICE 818

OTHER OUTPUT DEVICE 810

OTHER INPUT DEVICE 820

SENSOR 830

FIG. 8

## EUROPEAN SEARCH REPORT

Europäisches
Patentamt
European
Patent Office
Office européen
des brevets

**Application Number**

EP 25 15 8174

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/366413 A1 (ZHANG XIMIN [US] ET AL) 15 December 2016 (2016-12-15) <br> * figures 1,6 * <br> * paragraph [0019] - paragraph [0036] * <br> * paragraph [0051] - paragraph [0054] * <br> * paragraph [0071] - paragraph [0077] * <br> - - - - - | 1-13 | INV. <br> H04N19/147 <br> H04N19/117 <br> H04N19/124 <br> H04N19/14 <br> H04N19/142 <br> H04N19/82 |
| X | US 2019/052877 A1 (ZHANG XIMIN [US] ET AL) 14 February 2019 (2019-02-14) <br> * figures 1, 10 * <br> * paragraph [0026] - paragraph [0047] * <br> * paragraph [0058] - paragraph [0075] * <br> * paragraph [0085] - paragraph [0108] * <br> - - - - - | 1-13 | |
| X | US 11 356 672 B2 (SZ DJI TECHNOLOGY CO LTD [CN]) 7 June 2022 (2022-06-07) <br> * column 10, line 7 - column 13, line 60; figures 6, 8, 9 * <br> - - - - - | 1-13 | |
| A | EP 4 013 053 A1 (INTEL CORP [US]) 15 June 2022 (2022-06-15) <br> * the whole document * <br> - - - - - | 1-13 | **TECHNICAL FIELDS SEARCHED (IPC)** <br><br> H04N |

The present search report has been drawn up for all claims

| Place of search | Date of completion of the search | Examiner |
|---|---|---|
| Munich | 7 July 2025 | Kuhn, Peter |

## ANNEX TO THE EUROPEAN SEARCH REPORT
## ON EUROPEAN PATENT APPLICATION NO.

EP 25 15 8174

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | | | Publication date | Patent family member(s) | | | Publication date |
|---|---|---|---|---|---|---|---|
| US 2016366413 | A1 | | 15-12-2016 | CN | 107736026 | A | 23-02-2018 |
| | | | | US | 2016366413 | A1 | 15-12-2016 |
| | | | | WO | 2016200514 | A1 | 15-12-2016 |
| US 2019052877 | A1 | | 14-02-2019 | CN | 110784725 | A | 11-02-2020 |
| | | | | DE | 102019209067 | A1 | 30-01-2020 |
| | | | | US | 2019052877 | A1 | 14-02-2019 |
| US 11356672 | B2 | | 07-06-2022 | CN | 111164972 | A | 15-05-2020 |
| | | | | US | 2020275104 | A1 | 27-08-2020 |
| | | | | WO | 2019104635 | A1 | 06-06-2019 |
| EP 4013053 | A1 | | 15-06-2022 | CN | 114630123 | A | 14-06-2022 |
| | | | | EP | 4013053 | A1 | 15-06-2022 |
| | | | | US | 2021136378 | A1 | 06-05-2021 |
| | | | | US | 2025047851 | A1 | 06-02-2025 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ITU-T H.264*, 2003
- *ITU-T H.265*, 2013
- *AV1 Bitstream & Decoding Process Specification*, 2019
- *ITU-T H.266*, 2020